# EUROPÄISCHE PATENTSCHRIFT

(11) **EP 1 222 076 B1**
(45) Veröffentlichungstag und Bekanntmachung des Hinweises auf die Patenterteilung: **17.08.2005**
(21) Anmeldenummer: 00964120.0
(22) Anmeldetag: 06.09.2000
(51) Int. Cl.: B60B 3/04, B60B 21/02

(54) **FAHRZEUGRAD FÜR NUTZFAHRZEUGE**
VEHICLE WHEEL FOR GOODS VEHICLES
ROUE POUR VEHICULES UTILITAIRES

(30) Priorität: 21.10.1999 DE 29918476 U
(43) Veröffentlichungstag der Anmeldung: 17.07.2002
(73) Patentinhaber: Hayes Lemmerz Holding GmbH, 53639 Königswinter (DE)
(72) Erfinder: BÜCHEL, Hans-Heiner, 53639 Königswinter (DE); KERMELK, Werner, 53804 Much (DE); VORBECK, Hans-Joachim, 53604 Bad Honnef (DE); SCHEIDHAUER, Hans, D-53578 Windhagen (DE)
(74) Vertreter: Althaus, Arndt, Dipl.-Ing.
(86) Internationale Anmeldenummer: PCT/EP2000/008681
(87) Internationale Veröffentlichungsnummer: WO 2001/028785

(56) Entgegenhaltungen:
- EP-A- 0 521 340
- EP-A- 0 540 492
- EP-A- 0 701 911
- DE-A- 19 543 771
- GB-A- 968 317
- PATENT ABSTRACTS OF JAPAN vol. 2000, no. 07, 29. September 2000 (2000-09-29) & JP 2000 094901 A (TOPY IND LTD), 4. April 2000 (2000-04-04)
- PATENT ABSTRACTS OF JAPAN vol. 2000, no. 04, 31. August 2000 (2000-08-31) & JP 2000 001101 A (TOPY IND LTD), 7. Januar 2000 (2000-01-07)

## Beschreibung

Die Erfindung betrifft ein Fahrzeugrad für Nutzfahrzeuge, insbesondere für die Vorderachse von Nutzfahrzeugen, mit einer Radschüssel und einer an dieser angeschlossenen Tiefbettfelge, die eine äußere Felgenschulter mit Sicherheitselement und eine innere Felgenschulter aufweist, zwischen denen ein Felgentiefbett mit Tiefbettboden und Tiefbettflanken ausgebildet ist.

In der Vergangenheit wurden an den Vorderachsen von Nutzfahrzeugen häufig Räder mit schmalem Tiefbett und Nennmaulweiten bis etwa 9.00 verwendet, bei denen die Anbringung der Schüssel an der Felge neben dem Tiefbett im Bereich einer als Sicherheitselement dienenden Ledge erfolgte.

Bei dem aus der EP 701 911 B1 bekannten Fahrzeugrad ist die Radschüssel an einen zylindrischen Übergangsteil der Felge angeschlossen, der zwischen dem Felgenbett und der äußeren, einen Hump als Sicherheitselement aufweisenden Felgenschulter angeordnet und im Durchmesser größer als das Felgenbett ist, so daß zwischen Felgenbett und Übergangsteil eine Stufe ausgebildet ist. Der Umfangsteil der Radschüssel, mit dem diese an den Übergangsteil angeschlossen ist, verläuft linear bis in einen Bereich hinein, wo Belüftungslöcher zum Belüften von Bremsscheiben ausgebildet sind, die sich mitdrehend an den Fahrzeugachsen angeordnet sind. Durch den linearen Verlauf des Umfangteils wird ein vergleichsweise großer Raum für die Bremse geschaffen, allerdings zu Lasten eines hohen Gewichts der Radschüssel. Die äußere Seitenflanke des Tiefbetts weist eine Ventilöffnung auf und das Ventil ist bei diesem Fahrzeugrad mit geknicktem Ventilschaft ausgeführt, so daß es vollständig außerhalb der Radschüssel liegt. Hierdurch wird verhindert, daß ein sich zwischen feststehendem Bremssattel und Radschüssel einklemmender Fremdkörper im ungünstigen Fall das Ventil schlagartig abreißen kann.

Aus der DE 195 43 771 A1 ist ein Leichtmetall-Fahrzeugrad für die Massenproduktion im PKW-Bereich mit einer ein- oder zweiteiligen Schrägschulterfelge und einem Radstern als Radschüssel bekannt, die aufeinander zugerichtete Verbindungsflächen für eine Schweißverbindung aufweisen. Durch die aufeinander zugerichteten, am Übergangsbereich zwischen Tiefbettboden und Tiefbettflanke angeordneten Verbindungsflächen soll eine Reduzierung der Wandstärke im Schweißbereich aufgrund der für den Verbund zur Verfügung stehenden größeren Stoßfläche erzielt werden. Eine Vorfixierung der Verbindungsflächen kann über eine Zentrierlippe am Felgenteil erzielt werden.

Aus der GB 968 317 ist ein geschweißtes Fahrzeugrad mit einem einteiligen, mit Schrägschultern versehenen Tiefbettfelgenteil bekannt, bei dem die Radscheibe am gewölbten Übergangsbereich zwischen Tiefbettboden und Bettflanke angeschweißt ist. Die Anschweißung erfolgt hierbei in einem Bereich der Felge, der ausschließlich Druckbeanspruchungen unterliegen soll, so daß die Schweißnähte keinen Zugbelastungen ausgesetzt sind. In bevorzugter Ausführungsform läuft die Radschüssel radial auf die Krümmung zu.

Aus der EP 0 521 340 A2 ist ein Fahrzeugrad für Nutzfahrzeuge mit einer Schrägschulterfelge mit relativ langgestrecktem Tiefbett und angeschweißter Radschüssel bekannt, bei welchem die Spurbreite des Nutzfahrzeugs über eine Zusatzschüssel eingestellt werden kann. Die Zusatzschüssel ist beidseitig an der Radschüssel anschraubbar und weist hierzu einen an die Bolzenlöcher angepaßten Lochkreis auf. Über die Positionierung der Zusatzschüssel kann die Einpreßtiefe des Fahrzeugrades und folglich die Spurbreite des Fahrzeugrades verändert werden.

Die Zusatzschüssel kann auch zur Verwendung des Fahrzeugrades als Zwillingsrad eingesetzt werden.
Die Erfindung geht aus von einem von der Anmelderin vertriebenen Fahrzeugrad mit Steilschulterfelge und einer Nennmaulweite von 11,75, das als Sicherheitselement einen Ledge aufweist, an dem die Radschüssel angeschweißt ist und der eine bezogen auf die Radschüssel außenliegende Ventilöffnung aufweist, so daß ein geknicktes Ventil in ein in der Radschüssel vorgesehenes Belüftungsloch zwar hineinragt, insgesamt aber vollständig außen liegt. Das Tiefbett ist, bezogen zur Felgenmitte, vollständig im Bereich der inneren Felgenhälfte, während der Ledge und die äußere Felgenschulter die äußere Felgenhälfte ausmachen. Ein geknicktes Ventil ist zwingend erforderlich.

Neben den angeführten Nachteilen führen beide bekannten Räder zu höheren Kosten bei der Radherstellung und zu einem hohen Gewicht. Das hohe Gewicht von Felge und/oder Radschüssel wirkt sich besonders nachteilig bei Fahrzeugrädern mit breiteren Steilschulterfelgen aus, z.B. ab Nennmaulweiten von 11,75, die für Breitreifen bestimmt sind.

Mit der Erfindung soll ein Fahrzeugrad für Nutzfahrzeuge geschaffen werden, das gegenüber den bekannten Fahrzeugrädern Kostenvorteile bei hoher Sicherheit bietet und das die zunehmend steigenden Anforderungen an eine Gewichtsminimierung erfüllt.

Diese Aufgabe wird mit der in Anspruch 1 angegebenen Erfindung gelöst. Erfindungsgemäß ist vorgesehen, daß die Tiefbettfelge eine Steilschulterfelge ist, deren Felgenschultern eine Schulterneigung von etwa 15% zur Radachse aufweisen, daß sich der Boden des Tiefbetts beiderseits der Felgenmitte im wesentlichen geradlinig erstreckt und daß die äußere Bettflanke und die innere Bettflanke jeweils an die Felgenschultern anschließen, wobei die Radschüssel an dem Boden des Tiefbetts angeschweißt ist. Die erfindungsgemäße Ausführungsform führt zu Fahrzeugrädern mit einem breiten Tiefbett, das vorzugsweise mehr als 45% der Maulweite, insbesondere etwa 65% bis 75% der Maulweite der Felge einnimmt. Durch die Breite und Geradlinigkeit des Tiefbetts sowie das Anschweißen der Radschüssel an dem Boden des Tiefbetts ergeben sich deutliche Gewichtsreduzierungen. Bei der erfindungsgemäßen Felge ist ein Großteil des Materials in den Bereichen mit kleinstem Durchmesser angeordnet, und auch die Radschüssel erstreckt sich nur innerhalb der lichten Weite der Felge mit kleinstem Durchmesser. Im Vergleich zu den bisher verwendeten Fahrzeugrädern wird daher erheblich weniger Material benötigt. Weiter vorteilhaft sind weniger Hinterschneidungen vorhanden, so daß die Möglichkeit zur Ansammlung von Schlamm, Steinen und anderen Fremdkörpern reduziert ist. Das erfindungsgemäße Fahrzeugrad sorgt für größere Abdeckung der Scheibenbremsen, so daß deren Schutz verbessert ist.

Vorzugsweise ist die Ventilöffnung in der äußeren Bettflanke angeordnet. Dies bietet auch den Vorteil, daß ein einfaches, d.h. nicht abgewinkeltes und damit preiswertes Ventil vorgesehen werden kann, das aufgrund der erfindungsgemäßen Anordnung von Radschüssel und Ventilöffnung vollständig außerhalb der Radschüssel liegt.

Bei der bevorzugten Ausführungsform erstreckt sich der Boden des Tiefbetts zwischen der äußeren Bettflanke und der inneren Bettflanke mit konstantem Radialabstand von der Radachse. Für die Montage des Fahrzeugrades ist es zweckmäßig, wenn die Radschüssel an ihrem äußeren, am Tiefbett anliegenden Ende einen zylindrischen, an das Tiefbett angepaßten Umfangsteil aufweist. Dieser Umfangsteil kann vorzugsweise mit Preßsitz in die Felge eingesetzt sein, so daß die Radfestigkeit insgesamt erhöht ist.

Weiter vorzugsweise weist die Radschüssel zwischen Umfangsteil und dem die Nabenanlagefläche bildenden mittleren Radschüsselbereich einen geradlinigen Übergangsbereich auf, der mit dem Umfangsteil einen Winkel von 140° bis 155°, vorzugsweise 150° einschließt. Diese Maßnahme verbessert den Schutz für ein gerades Ventil und sorgt für einen größeren Abstand zwischen Ventil und Bremsscheiben, so daß der Hitzeeinfluß der Bremse auf das Ventil insbesondere dann minimiert ist, wenn nur der geradlinige Übergangsbereich die Aussparungen für die Belüftung von Scheibenbremsen aufweist.

Für das bevorzugte Anwendungsgebiet der Fahrzeugräder an der Vorderachse von Nutzfahrzeugen sollte der Umfangsteil in der Nähe der äußeren Bettflanke am Tiefbett anliegen, so daß das Fahrzeug eine positive Einpreßtiefe hat. Da bei dieser Anordnung von Felge und Radschüssel die auf letztere einwirkenden Momente höher als bei Anordnungen z.B. mit Einpreßtiefe Null sind, kann sich der Übergangsbereich zu weiteren Gewichtsreduzierungen von der Nabenanlagefläche zum Umfangsteil hin kontinuierlich verjüngen, so daß die Radschüssel nur in Zonen der maximalen Belastung die stärkste Materialdicke aufweist. Bei einer alternativen Ausführungsform, insbesondere für Anhänger, liegt der Umfangsteil in der Nähe der inneren Bettflanke am Tiefbett an, so daß die Nabenanlagefläche der Radschüssel mit der Felgenmitte zusammenfällt, mithin das Fahrzeugrad eine Einpreßtiefe von Null hat.

Für die Verwendung eines einfachen, geraden Ventils ist es besonders vorteilhaft, wenn zumindest die äußere, die Ventilöffnung aufweisende Bettflanke mit dem Boden des Tiefbetts einen Winkel von etwa 130° einschließt. Diese Maßnahme erleichtert auch die Ventilmontage bzw. Demontage.

Weitere Merkmale und Vorteile der Erfindung ergeben sich aus der nachfolgenden Beschreibung, den Unteransprüchen und der Zeichnung, worin bevorzugte Ausführungsformen der Erfindung beispielhaft näher erläutert sind. Es zeigen:
- Fig. 1: eine erste Ausführungsform des erfindungsgemäßen Fahrzeugrades in einem Teilquerschnitt; und
- Fig. 2: eine zweite Ausführungsform des erfindungsgemäßen Fahrzeugrades in einem Teilquerschnitt.

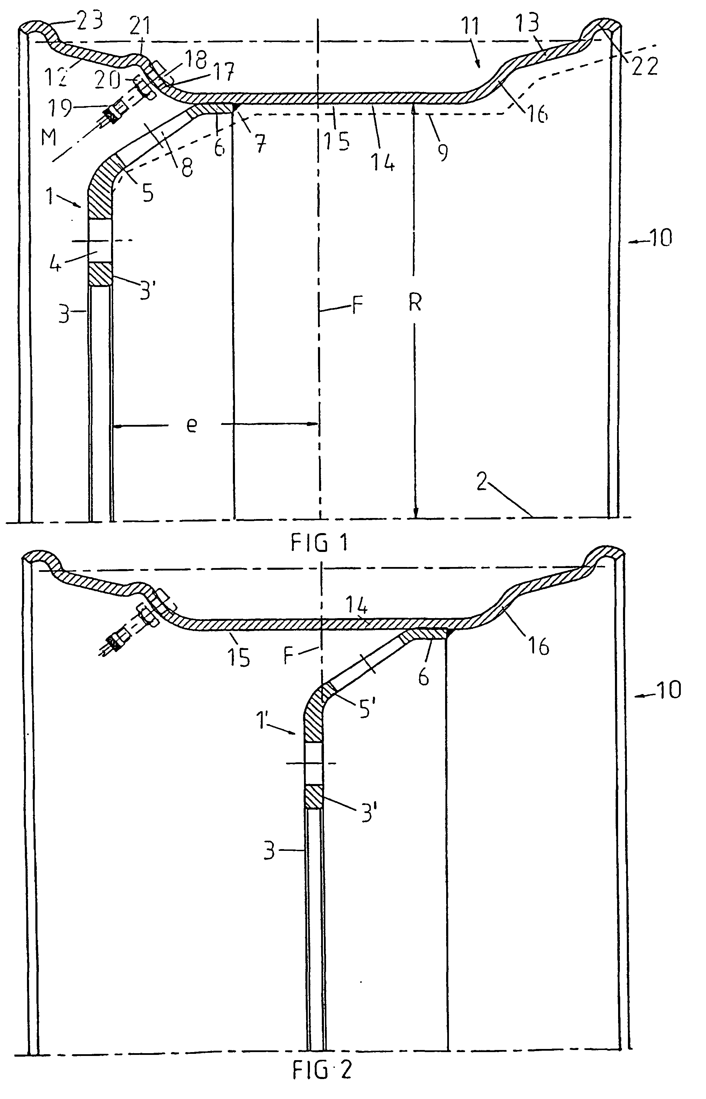

Fig. 1 zeigt schematisch ein insgesamt mit 10 bezeichnetes Fahrzeugrad für die Vorderachse eines Nutzfahrzeug, wobei das Fahrzeugrad 10 im wesentlichen aus einer Radschüssel 1 und einer Radfelge 11 besteht. Bei der Radfelge 11 handelt es sich um eine sogenannte Steilschulterfelge, deren äußere Felgenschulter 12 und innere Felgenschulter 13 eine Schulterneigung von etwa 15° zur Radachse 2 aufweisen. Zwischen den Felgenschultern 12, 13 ist ein innenliegendes, insgesamt mit 14 bezeichnetes Tiefbett ausgebildet, das von einem Boden 15 des Tiefbetts sowie zwei Bettflanken 16, 17 gebildet ist.

Die Bezeichnung innen (inneres) bzw. außen (äußeres) beziehen sich auf ein nicht dargestelltes Fahrzeug, das sich in Ansicht gem. Fig. 1 rechts von der Radschüssel 1 befindet. Die innere Bettflanke 16 liegt mithin näher am Fahrzeug als die äußere Bettflanke 17, in der eine Ventilöffnung 18 zum Durchstecken eines Ventils 19 für die Luftbefüllung eines nicht dargestellten, schlauchlosen Reifens ausgebildet ist. Wie der Fig. 1 zu entnehmen ist, handelt es sich bei dem Ventil 19 um ein einfaches, gerades Schraubventil, das mit einer Überwurfmutter 20 in dem Ventilloch 18 befestigt ist. Der Ventilschaft des Ventils 19 hat keinen Knick. Trotzdem befindet es sich vollständig außen bzw. an der Außenseite der Radschüssel 1.

Der Boden 15 des Tiefbetts 14 erstreckt sich zwischen der äußeren Bettflanke 17 und der inneren Bettflanke 16 stufenlos geradlinig und im gezeigten Ausführungsbeispiel mit konstantem Radialabstand R von der Radachse 2. Der Boden kann auch um wenige Grad zur Radachse 2 geneigt sein. Die innere Bettflanke 16 schließt mit dem Boden 15 des Tiefbetts 14 einen Winkel von etwa 125°-135° ein. Von der inneren Bettflanke 16 geht die Radfelge 11 ohne Hump unmittelbar in die innere Felgenschulter 13 über und endet in dem inneren Horn 22.

Die äußere Bettflanke 17 schließt mit dem Boden 15 des Tiefbetts 14 einen Winkel von etwa 130° ein, der also etwa gleich groß oder etwas größer als der Winkel zwischen Boden 15 und innerer Bettflanke 16 ist. Für das in der Ventilöffnung 18 in der äußeren Bettflanke 17 angeordnete Ventil 19 wird auf diese Weise ein spitzer Winkel zwischen seiner Mittelachse M und dem Boden 15 von etwa 40° erzielt. Die äußere Bettflanke 17 geht über einen Hump 21 unmittelbar in die äußere Felgenschulter 12 über und endet im äußeren Felgenhorn 23. Das Tiefbett 14 der Felge 11 erstreckt sich beiderseits der Felgenmitte F und nimmt etwa 70% der gesamten Felgenbreite (Maulweite) ein, die bei dem gezeigten Ausführungsbeispiel die Nennweite 11,75 hat. Der Boden 15 des Tiefbetts 14, der von der Radachse 2 den geringsten Abstand hat, erstreckt sich über annähernd 55% der Maulweite, so daß im Bereich des Tiefbettbodens eine erhebliche Gewichtsreduzierung der Felge 11 erzielt wird. Es versteht sich, daß die Abmessungen des Tiefbettbodens unter Berücksichtigung der Normen für u.a. die Felgenschulter in Grenzen verändert werden kann.

Abgesehen von Hump 21 kann die insgesamt einteilige Felge 11 symmetrisch zur Felgenmitte F ausgebildet sein. Der Hump 21 verbessert den Sitz eines nicht gezeigten schlauchlosen Reifens insbesondere bei Kurvenfahrten und reduziertem Luftdruck.

Die Radschüssel 1 weist einen mittleren Radschüsselabschnitt 3 mit Nabenanlagefläche 3' auf, mit der die Radschüssel 1 und damit das Fahrzeugrad 10 über durch die Bolzenlöcher 4 hindurchgesteckte Schraubbolzen an den Naben bzw. Achsen des Fahrzeugs montiert und befestigt werden kann. Der die Bolzenlöcher 4 aufweisende Radschüsselbereich 3 der Radschüssel 1 ist im wesentlichen rechtwinklig zur Radachse 2 und geht über einen Übergangsbereich 5 in einen Umfangsteil 6 über, der über einen Preßsitz und eine Schweißnaht 7 mit dem Boden 15 des Tiefbetts 14 verbunden ist. Der Umfangsteil 6 verläuft hierzu planparallel zum Boden 15 des Tiefbetts 14. Der Übergangsbereich 5 verläuft zwischen dem Umfangsteil 6 und dem Radschüsselabschnitt 3 geradlinig, wobei der Winkel zwischen Umfangsteil 6 und Übergangsbereich 5 etwa 150° beträgt. Der Übergangsbereich kann auch Stufen u.dgl. aufweisen. Ausschließlich innerhalb des Übergangsbereichs 5 sind die Belüftungslöcher 8 zum Belüften der nicht gezeigten Scheibenbremsen angeordnet. Der Übergangsbereich 5 verjüngt sich kontinuierlich vom mittleren Radschüsselabschnitt 3 mit der Nabenanlagefläche 3' zum Übergangsteil 6 hin.

Die Hüllkontur der Bremse ist in Fig. 1 mit der gestrichelten Linie 9 angedeutet. Es besteht nur ein geringer Abstand zwischen der Bremse und dem Fahrzeugrad und hierdurch eine gute Abdekkung. Durch die etwa parallele Anordnung des Übergangsbereichs 5 der Radschüssel 1 und der Mittelachse M des Ventils 19 wird ein ausreichender Abstand zwischen der Radschüssel 1 und dem Ventil 19 gewährleistet, so daß auch ein gerades Schraubventil ohne Behinderung durch die Radschüssel 1 bzw. ohne zusätzliche Montageöffnungen im Übergangsbereich 5 montiert oder demontiert werden kann. Da eine Montageöffnung nicht erforderlich ist, kann die Ventilöffnung auch versetzt zu den Belüftungslöchern, d.h. etwa mittig zwischen zwei Belüftungslöchern angeordnet sein.

Beim Fahrzeugrad 10 nach der Fig. 1 hat die Nabenanlagefläche 3' einen Abstand e von der Felgenmitte F, mithin eine positive Einpreßtiefe, so daß sich das in Fig. 1 gezeigte Fahrzeugrad insbesondere für die Verwendung an der Vorderachse von Nutzfahrzeugen eignet. Bei Anordnung des Anschlußbereiches des Umfangsteils 6 an dem Felgenbett 14 nahe der äußeren Bettflanke 17 wird ein bevorzugt für Breitreifen mit Nennmaulweiten ab 11,75 vorgesehenes Fahrzeug für die Vorderachse geschaffen.

In Fig. 2 ist ein insgesamt mit 10' bezeichnetes Fahrzeugrad einer alternativen Ausführungsform gezeigt. Abweichend von dem in Fig. 1 gezeigten Ausführungsbeispiel ist hier der Anschlußbereich zwischen dem Umfangsteil 6 und dem Boden 15 des Tiefbetts 14 nahe der inneren Bettflanke 16. Die Nabenanlagefläche 3' beim Fahrzeugrad 10' fällt daher mit der Felgenmitte F zusammen, so daß das Fahrzeugrad 10' eine Einpreßtiefe von Null hat. Das Fahrzeugrad 10' ist vorzugsweise für die Achsen von Anhängern vorgesehen. Aufgrund der bei diesen Fahrzeugrädern geringeren Einpreßtiefe kann die Radschüssel l' im mittleren Radschüsselbereich mit geringerer Dicke als bei der Ausführungsform nach Fig. 1 ausgeführt werden, so daß sich die Radschüssel l' im Übergangsbereich 5' zur weiteren Gewichtsoptimierung nur unwesentlich verjüngt.

## Patentansprüche

1. Fahrzeugrad für Nutzfahrzeuge, insbesondere für die Vorderachse von Nutzfahrzeugen, mit einer Radschüssel (1) und einer an dieser angeschlossenen Tiefbettfelge (11), die eine äußere Felgenschulter (12) mit Sicherheitselement und eine innere Felgenschulter (13) aufweist, zwischen denen ein Felgentiefbett (14) mit Tiefbettboden (15) und Tiefbettflanken (16, 17) ausgebildet ist, **dadurch gekennzeichnet, daß** die Tiefbettfelge (11) eine Steilschulterfelge ist, deren Felgenschultern (12, 13) eine Schulterneigung von etwa 15° zur Radachse aufweisen, daß sich der Boden (15) des Tiefbetts (14) beiderseits der Felgenmitte (F) im wesentlichen geradlinig erstreckt und daß die äußere Bettflanke (17) und die innere Bettflanke (16) jeweils an die Felgenschultern (12, 13) anschließen, wobei die Radschüssel (1) an dem Boden (15) angeschweißt ist.

2. Fahrzeugrad nach Anspruch 1, **dadurch gekennzeichnet, daß** das Tiefbett (14) mehr als 45% der Maulweite, insbesondere etwa 65% bis 75% der Maulweite der Felge einnimmt.

3. Fahrzeugrad nach Anspruch 1 oder 2, **dadurch gekennzeichnet, daß** die äußere Bettflanke (17) eine Ventilöffnung (18) aufweist.

4. Fahrzeugrad nach einem der Ansprüche 1 bis 3, **dadurch gekennzeichnet, daß** sich der Boden (15) zwischen der äußeren Bettflanke (17) und der inneren Bettflanke (16) mit konstantem Radialabstand (R) von der Radachse (2) erstreckt.

5. Fahrzeugrad nach einem der Ansprüche 1 bis 4, **dadurch gekennzeichnet, daß** die Radschüssel (1) an ihrem äußeren, am Tiefbett (14) anliegenden Ende einen zylindrischen, an das Tiefbett (14) angepaßten Umfangsteil (6) aufweist.

6. Fahrzeugrad nach Anspruch 5, **dadurch gekennzeichnet, daß** der Umfangsteil (6) mit Preßsitz in die Felge (11) eingesetzt ist.

7. Fahrzeugrad nach Anspruch 5 oder 6, **dadurch gekennzeichnet, daß** die Radschüssel (1) zwischen Umfangsteil (6) und mittlerem, die Nabenanlagefläche (3') aufweisenden Radschüsselabschnitt (3) einen geradlinigen Übergangsbereich (5) aufweist, der mit dem Umfangsteil (6) einen Winkel von 140°-155°, vorzugsweise 150° einschließt.

8. Fahrzeugrad nach Anspruch 7, **dadurch gekennzeichnet, daß** nur der Übergangsbereich (5) Aussparungen (8) für die Belüftung von Scheibenbremsen aufweist.

9. Fahrzeugrad nach einem der Ansprüche 5 bis 8, **dadurch gekennzeichnet, daß** der Umfangsteil (6) in der Nähe der äußeren Bettflanke (17) am Boden (15) anliegt.

10. Fahrzeugrad nach Anspruch 9, **dadurch gekennzeichnet, daß** sich der Übergangsbereich (5) vom die Nabenanlagefläche (3') aufweisenden mittleren Radschüsselabschnitt (3) zum Umfangsteil (6) hin kontinuierlich verjüngt.

11. Fahrzeugrad nach einem der Ansprüche 5 bis 8, **dadurch gekennzeichnet, daß** der Umfangsteil (6) in der Nähe der inneren Bettflanke (16) am Boden (15) anliegt, so daß die Nabenanlagefläche (3') der Radschüssel (1) mit der Felgenmitte (F) zusammenfällt.

12. Fahrzeugrad nach einem der Ansprüche 1 bis 11, **dadurch gekennzeichnet, daß** die äußere, die Ventilöffnung (18) aufweisende Bettflanke (17) mit dem Boden (15) des Tiefbetts (14) einen Winkel von etwa 130° einschließt.

13. Fahrzeugrad nach einem der Ansprüche 1 bis 12, **dadurch gekennzeichnet, daß** das Sicherheitselement ein Hump (21) ist, der im Anschlußbereich von äußerer Bettflanke (17) und äußerer Felgenschulter (12) ausgebildet ist.

14. Fahrzeugrad nach einem der Ansprüche 1 bis 13, **dadurch gekennzeichnet, daß** die Ventilöffnung in der äußeren Bettflanke etwa mittig zwischen zwei benachbarten Belüftungslöchern in der Radschüssel angeordnet ist.

## Claims

1. Vehicle wheel for goods vehicles, in particular for the front axle of goods vehicles, with a wheel disc (1) and a drop centre rim (11) connected thereto, which comprises an outer rim shoulder (12) with a safety element and an inner rim shoulder (13), between which is formed a rim drop centre (14) with a drop centre base (15) and drop centre tapers (16, 17), **characterised in that** the drop centre rim (11) is a steep shoulder rim, the rim shoulders (12, 13) of which comprise a shoulder inclination of about 15° to the wheel axle, that the base (15) of the drop centre (14) essentially extends in a linear manner on both sides of the rim centre (F) and that the outer centre taper (17) and the inner centre taper (16) are each connected to the rim shoulders (12, 13), whereby the wheel disc (1) is welded to the base (15).

2. Vehicle wheel according to claim 1, **characterised in that** the drop centre (14) takes up more than 45% of the width, in particular approximately 65% to 75% of the width of the rim.

3. Vehicle wheel according to claim 1 or 2, **characterised in that** the outer centre taper (17) comprises a valve opening (18).

4. Vehicle wheel according to one of claims 1 to 3, **characterised in that** the base (15) extends between the outer centre taper (17) and the inner centre taper (16) with a constant radial distance ® from the wheel axis (2).

5. Vehicle wheel according to one of claims 1 to 4, **characterised in that** the wheel disc (1) comprises a cylindrical circumferential part (6) adapted to the drop centre (14) at its outer end abutting the drop centre (14).

6. Vehicle wheel according to claim 5, **characterised in that** the circumferential part (6) is inserted into the rim (11) by means of press fit.

7. Vehicle wheel according to claim 5 or 6, **characterised in that** the wheel disc (1) comprises a straight transition region (5) between the circumferential part (2) and the central wheel disc section (3) comprising the hub abutment surface (3'), which region encloses an angle of 140° - 155°, preferably 150°, with the circumferential part (6).

8. Vehicle wheel according to claim 7, **characterised in that** the only the transition region (5) comprises recesses (8) for the ventilation of disc brakes.

9. Vehicle wheel according to one of claims 5 to 8, **characterised in that** the circumferential part (6) abuts the base (15) in the proximity of the outer centre taper (17).

10. Vehicle wheel according to claim 9, **characterised in that** the transition region (5) continually tapers from the central wheel disc section (3) comprising the hub abutment surface (3') to the circumferential part (6).

11. Vehicle wheel according to one of claims 5 to 8, **characterised in that** the circumferential part (6) abuts the base (15) in the proximity of the inner centre taper (16), so that the hub abutment surface (3') of the wheel disc (1) coincides with the rim centre (F).

12. Vehicle wheel according to one of claims 1 to 11, **characterised in that** the outer centre taper (17) comprising the valve opening (18) encloses an angle of about 130° with the base (15) of the drop centre (14).

13. Vehicle wheel according to one of claims 1 to 12, **characterised in that** the safety element is a hump (21) which is formed in the connection region of the outer centre taper (17) and the outer rim shoulder (12).

14. Vehicle wheel according to one of claims 1 to 13, **characterised in that** the valve opening in the outer centre taper is arranged approximately centrally between two adjacent ventilation holes in the wheel rim.

## Revendications

1. Roue pour véhicules utilitaires, en particulier pour l'essieu avant de véhicules utilitaires, comprenant un voile de roue (1) et une jante à base creuse (11) raccordée à celui-ci, laquelle comporte un épaulement extérieur (12) de la jante, avec élément de sécurité, et un épaulement intérieur (13) de la jante, entre lesquels est formée une base creuse (14) de la jante comprenant un fond (15) de la base creuse et des flancs (16, 17) de la base creuse, **caractérisée en ce que** la jante à base creuse (11) est une jante à épaulements en pente raide, dont les épaulements présentent une inclinaison d'environ 15° par rapport à l'axe de roue, **en ce que** le fond (15) de la base creuse (14) s'étend sensiblement en ligne droite de part et d'autre de la médiane (F) de la jante, et **en ce que** le flanc extérieur (17) de la base et le flanc intérieur (16) de la base se raccordent respectivement aux épaulements (12, 13) de la jante, le voile (1) de la jante étant soudé au fond (15).

2. Roue de véhicule selon la revendication 1, **caractérisée en ce que** la base creuse (14) occupe plus de 45% de la largeur d'ouverture, en particulier environ 65% à 75% de la largeur d'ouverture de la jante.

3. Roue de véhicule selon la revendication 1 ou 2, **caractérisée en ce que** le flanc extérieur (17) de la base présente une ouverture de valve (18).

4. Roue de véhicule selon l'une des revendications 1 à 3, **caractérisée en ce qu'**entre le flanc extérieur (17) de la base et le flanc intérieur (16) de la base, le fond (15) s'étend à distance radiale (R) constante de l'axe de roue (2).

5. Roue de véhicule selon l'une des revendications 1 à 4, **caractérisée en ce qu'**à son extrémité extérieure adjacente à la base creuse (14), le voile de roue (1) présente une partie périphérique cylindrique (6) adaptée à la base creuse (14).

6. Roue de véhicule selon la revendication 5, **caractérisée en ce que** la partie périphérique (6) est insérée à la presse dans la jante (11).

7. Roue de véhicule selon la revendication 5 ou 6, **caractérisée en ce qu'**entre la partie périphérique (6) et la partie centrale (3) du voile de roue présentant la face (3') d'appui sur le moyeu, le voile de roue (1) présente une zone de transition (5) rectiligne, qui forme avec la partie périphérique (6) un angle de 140°-155°, de préférence 150°.

8. Roue de véhicule selon la revendication 7, **caractérisée en ce que** seule la zone de transition (5) présente des évidements (8) pour la ventilation de freins à disque.

9. Roue de véhicule selon l'une des revendications 5 à 8, **caractérisée en ce que** la partie périphérique (6) est adjacente au fond (15) au voisinage du flanc extérieur (17) de la base.

10. Roue de véhicule selon la revendication 9, **caractérisée en ce que** la zone de transition (5) se rétrécit de façon continue en allant de la partie centrale (3) du voile de roue, présentant la face (3') d'appui sur le moyeu, à la partie périphérique (6).

11. Roue de véhicule selon l'une des revendications 5 à 8, **caractérisée en ce que** la partie périphérique (6) est adjacente au fond (15) au voisinage du flanc intérieur (16) de la base, de sorte que la face (3') du voile de roue (1) qui s'appuie sur le moyeu coïncide avec la médiane (F) de la jante.

12. Roue de véhicule selon l'une des revendications 1 à 11, **caractérisée en ce que** le flanc extérieur (17) de la base, présentant l'ouverture de valve (18), forme un angle d'environ 130° avec le fond (15) de la base creuse (14).

13. Roue de véhicule selon l'une des revendications 1 à 12, **caractérisée en ce que** l'élément de sécurité est un bourrelet (21) formé dans la zone de raccordement du flanc extérieur (17) de la base et de l'épaulement extérieur (12) de la jante.

14. Roue de véhicule selon l'une des revendications 1 à 13, **caractérisée en ce que** l'ouverture de valve est aménagée dans le flanc extérieur de la base sensiblement à mi-distance entre deux trous de ventilation voisins dans le voile de roue.
